(19) Europäisches Patentamt
European Patent Office
Office européen des brevets

(11) Veröffentlichungsnummer: **0 300 419 B1**

(12) **EUROPÄISCHE PATENTSCHRIFT**

(45) Veröffentlichungstag der Patentschrift: **01.09.93**

(51) Int. Cl.5: **B05D 1/20**

(21) Anmeldenummer: **88111577.8**

(22) Anmeldetag: **19.07.88**

(54) **Film aus mindestens einer monomolekularen Schicht.**

(30) Priorität: **23.07.87 DE 3724364 U**

(43) Veröffentlichungstag der Anmeldung:
**25.01.89 Patentblatt 89/04**

(45) Bekanntmachung des Hinweises auf die
Patenterteilung:
**01.09.93 Patentblatt 93/35**

(84) Benannte Vertragsstaaten:
**CH DE FR GB IT LI NL SE**

(56) Entgegenhaltungen:
**FR-A- 2 584 083**

**JOURNAL OF MOLECULAR ELECTRONICS,
Band 1, Nr. 1, Juli-September 1985, Seiten
3-17, Chichester, Sussex, GB; M. SUGI:
"Langmuir-Blodgett films - a course towards
molecular electronics: a review"**

(73) Patentinhaber: **HOECHST AKTIENGESELL-
SCHAFT**

**D-65926 Frankfurt(DE)**

(72) Erfinder: **Vogel, Viola, Dr.**
**Baumschulenweg 7**
**D-3400 Göttingen(DE)**
Erfinder: **Möbius, Dietmar, Dr.**
**Kampenweg 4**
**D-3401 Waake(DE)**

**Beschreibung**

Die Erfindung bezieht sich auf einen Film aus mindestens einer monomolekularen Schicht.

Dicht gepackte monomolekulare Filme grenzflächenaktiver Moleküle mit einer Schichtdicke von 2-3 nm lassen sich an der Grenzfläche von Flüssigkeiten durch Zusammenschieben der Moleküle erzeugen. Grenzflächenaktive Moleküle bestehen aus mindestens zwei molekularen Untereinheiten, die sich stark in ihrer Wasserlöslichkeit unterscheiden. Die eine Untereinheit ist hydrophil (leicht wasserlöslich), die andere hydrophob (nahezu wasserunlöslich). Typische hydrophile Gruppen (Kopfgruppen) sind die Hydroxyl- (-OH), die Carboxyl (-COOH) oder auch die Phosphatidylgruppen der Phospholipide. Kohlenwasserstoffketten der Summenformel $-(CH_2)_n-CH_3$ sind meist die hydrophoben Bestandteile der Moleküle. Die polare Kopfgruppe verankert das Molekül in der Grenzschicht und verhindert das ungeordnete Übereinanderschieben der Moleküle. Der hydrophobe Rest verhindert das Abtauchen des Moleküls in die wäßrige Subphase. Die Grenzflächenaktivität des Amphiphils hängt von dem Verhältnis der polaren zu den unpolaren Gruppen und deren Löslichkeit ab.

Aus der Abmessung der Oberfläche, dem Spreitvolumen und der Konzentration der Lösung beim Zusammenschieben wird die mittlere Fläche pro Molekül berechnet. Phasenübergänge bei der Kompression der Moleküle lassen sich in der Schub/Flächen-Isotherme verfolgen.

Die Änderung der Oberflächenspannung $\pi$ bei Kompression von oberflächenaktiven Molekülen, auch Schub genannt, ist definiert als

$$\pi = \sigma_{H20} - \sigma_M.$$

$\sigma_{H20}$ ist die Oberflächenspannung der freien Wasseroberfläche, $\sigma_M$ die der monofilmbelegten. Die dichtest mögliche Packung der Moleküle in einem monomolekularen Film wird durch den steilen Anstieg der Isotherme angezeigt. Die Fläche von etwa 20 $Å^2$ entspricht dem Flächenbedarf einer senkrecht stehenden Kohlenwasserstoffkette.

Die Moleküle werden mit einer Barriere zusammengeschoben, wobei die Ketten bei wachsender Dichte senkrecht zur Grenzschicht orientiert werden. Während der Kompression entsteht durch Selbstorganisation der Moleküle in der Grenzschicht ein hochgeordneter, monomolekularer Film, dessen konstante Schichtdicke nur durch die Kettenlänge der Moleküle bestimmt wird. Die typische Dicke eines solchen Films liegt zwischen 2-3 nm.

Die kettenförmigen und in der Polarität unsymmetrischen Moleküle lassen sich wegen der festen Oberflächenverankerung mit einer Barriere zusammenzuschieben, und die Ketten werden bei wachsender Dichte senkrecht zur Grenzschicht orientiert. Während der Kompression entsteht durch Selbstorganisation der Moleküle in der Grenzschicht ein hochgeordneter, monomolekularer Film.

Für die Anwendung dieser hochgeordneten Filme ist wesentlich, daß sie auf feste Träger übertragbar sind. Dies erfolgt durch senkrechtes Absenken und Austauchen des Trägers durch die monofilmbelegte Wasseroberfläche. Mit dem nach Langmuir und Blodgett (LANGMUIR 1920, BLODGETT 1936) benannten Verfahren (LB-Technik) lassen sich Schichtsysteme aus monomolekularen Filmen aufbauen. Die Übertragung eines Films von der flüssigen Phase auf einen festen Träger unter konstant gehaltenem Schub zeigt sich als Abnahme der filmbedeckten Wasseroberfläche während des Tauchvorgangs. Möglich ist im übrigen auch ein Absenken des Trägers nahezu parallel zur monofilmbelegten Wasseroberfläche ("flaches Tauchen").

Der Aufbau und die Verwendung von Systemen aus monomolekularen Schichten erfordert eine zuverlässige Übertragung der Filme von der Wasseroberfläche auf feste Träger. Die Systeme sollen an Luft, im Vakuum oder auch im Kontakt mit Lösungen stabil sein. Eine Grundanforderung ist daher eine kontrollierte Haftung der Filme auf der Unterlage. Bei der heute üblichen Methodik des Schichtaufbaus folgt auf eine Grenzfläche mit hydrophilen Gruppen, z.B. Carboxylgruppen, eine Grenzfläche von hydrophoben Gruppen, z.B. Methylgruppen. Die Haftung zwischen geladenen hydrophilen Gruppen wird unter anderem durch Coulomb-Wechselwirkungen zwischen Ladungen, durch Dipol-Dipol-Wechselwirkungen und Wasserstoffbrückenbindungen erreicht und kann durch Einbau zweiwertiger Ionen verstärkt werden. Die hydrophoben Endgruppen der im Kontakt stehenden Schichten haften aufgrund von van-der-Waals-Wechselwirkungen aneinander.

Die Aufgabe der Erfindung bestand daher darin, Filme zu finden, welche bei geringem Aufwand eine zuverlässige Haftung auf der Unterlage besitzen.

Es wurde gefunden, daß die Aufgabe gelöst werden kann mit einem Film, welcher aus mindestens einer monomolekularen Schicht aus mindestens einer speziellen amphiphilen Verbindung besteht.

Die Erfindung betrifft somit den in den Ansprüchen beschriebenen Film und das Verfahren zu seiner Herstellung.

Der erfindungsgemäße Film besteht aus mindestens einer auf einen Träger übertragenen monomolekularen Schicht, welche eine besondere amphiphile Verbindung enthält oder aus dieser amphiphilen Verbindung besteht. Der hydrophobe Molekülbereich dieser Verbindung besteht aus mindestens einer mindestens endständig chemisch modifizierten Kohlenwasserstoffkette. Allgemein hat die besondere amphiphile Verbindung die allgemeine Formel

$Y^1$-$B_m$-X-$A_n$-Y oder X-$A_n$-Y

wobei

X eine polare Gruppe,

A und B Methen oder halogenierte Methengruppen und $Y^1$ eine Methyl- oder halogenierte Methylgruppe, Y ein Substituent, dessen Polarität sich von der hydrophoben Kette unterscheidet und kleiner oder gleich von X ist, n größer/gleich m ist und m eine ganze Zahl von 4 bis 25 bedeutet.

Vorzugsweise steht A für die Gruppe $CH_2$. Dann ergibt sich eine Verbindung der Formel (I)

X-$(CH_2)_n$-Y     (I),

worin X eine hydrophile Gruppe, vorzugsweise eine Hydroxy-, Carboxyl- oder Aminogruppe, Y einen chemisch modifizierten Substituenten, dessen Hydrophilie kleiner oder gleich dem von X ist. Weitere Möglichkeiten für X sind die Reste $NR^1R^2$, wobei $R^1$ für H oder $C_1$-$C_4$-Alkyl und $R^2$ für $C_1$-$C_4$-Alkyl oder für $CH_2CH_2OH$ steht,

$N^+R^1R^2R^3$, wobei $R^1,R^2,R^3$ für Methyl oder Äthyl stehen, oder $NH_3^+$.

Y bedeutet insbesondere einen Phenylrest, eine mindest teilweise halogenierte Gruppe, z.B. den Rest $(CA_2)_mCB_3$ wobei A und B unabhängig voneinander Halogen, insbesondere für Cl oder F stehen und m eine Zahl von 0 bis 18 bedeutet, eine Estergruppe -$CO_2R$, vorzugsweise eine Methyl- oder Ethylestergruppe, die Säureestergruppen -$OCO(CH_2)_pCH_3$ wobei p eine Zahl von 0 bis 4 bedeutet, eine Keto- oder eine Merkaptogruppe.

Bei Filmen, die aus mindestens zwei monomolekularen Schichten bestehen, kann darüberhinaus Y für den

Acetylenrest - C ≡ CH, den

Diacetylenrest - C ≡ C-C≡CH oder den Vinylrest stehen.

Beispiele für Verbindungen der Formel I sind in der folgenden Tabelle aufgeführt

| X-$(CH_2)_n$ | | Y |
|---|---|---|
| $CH_3(CH_2)_4$ | -O-CO $(CH_2)_{20}$ | Phenyl |
| | $COOH(CH_2)_{14}$ | CO-p-tolyl |
| | HO-$(CH_2)_{16}$ | Pyrenyl ($C_{16}H_{19}$) |
| $CH_3(CH_2)_6$ | -NH-$(CH_2)_{10}$ | $CF_3$ |

Die Hydrophilie einer Gruppe kann durch Bestimmung der Kettenlängenabhängigkeit des Verteilungsgleichgewichts der alkylsubstituierten Gruppe zwischen Wasser und Hexan ermittelt werden. Dieses Verfahren ist dargestellt in Charles Tanford: The Hydrophobic Effect: Formation of Micelles and Biological Membranes, John Wiley & Sons, 2nd Ed., New York 1980 p.14ff.

Besonders bevorzugt ist eine amphiphile Verbindung der Formel (II)

X-$(CH_2)_n$-$(CF_2)_m$-$CF_3$     (II)

worin X die obengenannte Bedeutung hat, n eine ganze Zahl von 6-24, m eine Zahl von 0 bis 18 und die Summe aus n+m eine ganze Zahl von 6 bis 24 ist.

Es ist auch möglich, die Verbindungen der Formeln (I) oder (II) zusammen mit einer Verbindung der Formel (III)

$X^1$-$(CH_2)_p$-$CH_3$     (III)

zu verwenden. Bevorzugt sind molare Mischungsverhältnisse I:III bzw. II:III von 1:1 bis 1:10, insbesondere

3

1:1 bis 1:4. Vorzugsweise ist n 6-24, insbesondere 8-24. In Formel (III) bedeutet $X^1$ eine hydrophile Gruppe und p ist eine Zahl von 12 bis 24.

In dem Film sind die Moleküle der schichtbildenden amphiphilen Verbindung gleichsinnig, parallel nebeneinander orientiert. Bevorzugt ist eine Orientierung im wesentlichen senkrecht zur Schichtebene, da dann die erhaltenen Filme mechanisch besonders stabil sind.

Weiterhin besteht der erfindungsgemäße Film vorzugsweise aus mindestens zwei monomolekularen Schichten.

Dabei sind zwei Arten des Kontaktes zwischen benachbarten Schichten möglich:

(1) Die Moleküle von benachbarten Schichten sind vorzugsweise jeweils mit ihrem hydrophilen/hydrophoben Bereich der hydrophilen/hydrophoben Oberfläche der Nachbarschicht zugewandt. Die benachbarten Schichten unterscheiden sich in ihrer chemischen Zusammensetzung.

(2) Die Moleküle von benachbarten Schichten sind vorzugsweise jeweils mit ihrem hydrophilen/hydrophoben Bereich der hydrophoben/hydrophilen Oberfläche der Nachbarschicht zugewandt. Die benachbarten Schichten können sich in ihrer chemischen Zusammensetzung unterscheiden.

Eine bevorzugte Ausführungsform des erfindungsgemäßen Films besteht darin, daß er aus einer monomolekularen Schicht aus mindestens einer besonderen amphiphilen Verbindung besteht, deren Moleküle mit ihrem hydrophoben Bereich mit der hydrophoben Oberfläche eines Trägers in Kontakt stehen.

Die Dipolmomente einiger Gruppen sind nachstehend aufgeführt:

$CH_3$- : + 0,35 D; -COOH : -0,2 D; $CF_3$ : -0,41 D;

$N^+H(CH_3)_2$ : +0,78 D; $N^+H_3$ : 0,14 D;

$CO_2CH_3$ : +0,46 D; $CH_2OH$ : - 0,12 D

Phosphatidylcholin : + 0,12 D;

phosphatidylethanolamin : -0,09 D

Ein negatives Vorzeichen bedeutet, daß das Dipolmoment von Monofilm zum Wasser gerichtet ist. Dipolmomente von weiteren Gruppen lassen sich über die Dipolmomente bekannter Verbindungen errechnen. Wenn z.B. die Verbindung XY das Dipolmoment u und der Gruppe X das bekannte Dipolmoment Z hat, so errechnet sich das Dipolmoment der Gruppe Y zu $\mu_B = U-Z$.

Insbesondere weist die besondere amphiphile Verbindung einen hydrophoben Molekülbereich mit einem Dipolmoment auf, das an der Kontaktfläche gleichgerichtet ist zu dem Dipolmoment des hydrophoben Molekülbereichs der amphiphilen Verbindung, die im wesentlichen die benachbarte Schicht bildet.

Zur Herstellung der erfindungsgemäßen Filme werden die amphiphilen Verbindungen in einem flüchtigen Lösungsmittel auf die Oberfläche einer polaren Subphase, meist Wasser, gebracht (gespreitet). Bevorzugt sind Verbindungen geringer Wasserlöslichkeit (maximal 1 g/l), weil sich sonst Filme auf Wasser mit der LB-Technik schlecht herstellen lassen.

Dies schließt nicht aus, daß amiphiphile Verbindungen mit höherer Wasserlöslichkeit im Gemisch mit amphiphilen Verbindungen geringer Wasserlöslichkeit erfolgreich eingesetzt werden können. Für die nichtlinear-optischen Eigenschaften des Films ist die Wasserlöslichkeit jedoch unwichtig. Nach dem Verdampfen wird der gebildete Film durch eine bewegliche Barriere zusammengeschoben.

Der Film wird durch flaches oder senkrechtes Eintauchen und senkrechtes Austauchen eines geeigneten Trägers von der wäßrigen Subphase auf den Träger übertragen.

Als Träger sind geeignet Festkörper mit sauberen Oberflächen, wie beispielsweise Glas-, Keramik- oder Metallplatten und -Fasern, Metall- und Halbleiteroberflächen oder Folien und Fasern aus Polystyrol, Polypropylen, Polyethylen und anderen Kunststoffen.

Die erfindungsgemäßen Filme zeichnen sich durch große Gleichmäßigkeit und sehr gute Haftung auf dem Träger aus. Sie können Anwendung finden beispielsweise zur Verbesserung der Gleiteigenschaften des Trägers, z.B. von Schreib-/Leseköpfen magnetischer Aufzeichnungsgeräte, bei der Herstellung von Sensoren in der Halbleitertechnologie, in der nichtlinearen Optik und bei pyroelektrischen Materialien. Die Erfindung wird durch die Beispiele näher erläutert.

**AUSGANGSPRODUKTE**

Die in den Beispielen verwendeten Verbindungen und deren Strukturformeln sind nachfolgend aufgeführt:

| Verbindung | Symbol | Strukturformel |
|---|---|---|
| Hexadekan | HD | $H_3C-(CH_2)_{14}-CH_3$ |
| Fettsäuren | $C_n$ | $H_3C-(CH_2)_{n-2}-COOH$ |
| Trifluorokta-dekansäure | $F_3C_{18}$ | $F_3C-(CH_2)_{16}-COOH$ |
| Monomethyl-okta-dekandioat | $ME-C_{18}$ | $H_3COOC-(CH_2)_{16}-COOH$ |
| Methyl-stearat | C18-ME | $H_3C-(CH_2)_{16}-COOCH_3$ |
| Eicosyl-amin | $C20-NH_2$ | $H_3C-(CH_2)_{19}-NH_2$ |
| Di-oktadecyl-dimethyl-ammo-niumbromid | DOMA | $H_3C-(CH_2)_{17}$ ... $CH_3$ — $N^+$ ... $Br^-$ — $H_3C-(CH_2)_{17}$ ... $CH_3$ |
| Cyaninfarbstoff | S9 | |

Die Reinheit der zur Herstellung der monomolekularen Filme verwendeten Verbindungen liegt über 99%. Die Verbindungen wurden in $(1-5) \cdot 10^{-3}$ molaren $CHCl_3$-Lösungen gespreitet. Als Lösungsmittel diente säulenchromatographisch nachgereinigtes Chloroform, $CHCl_3$, mit 1 Vol-% Ethanol versetzt Es wurden äquimolare Mischungen von $F_3C_{18}$ und $C_{16}$ verwendet.

Als Subphase wurde ausschließlich bidestilliertes Wasser verwendet.

Die Glasträger wurden in Chromschwefelsäure gereinigt und mehrfach mit Wasser gespült. In Vergleichbeispiel C und Beispiel 3) wurden sie anschließend zur Hydrophobierung in der Gasphase silaniert.

**Vergleichsbeispiele A und B und Beispiele 1 und 2**

Je ein Schichtsystem von vier Monolagen wurde auf die hydrophile Oberfläche eines rechteckigen Glasträgers mit einer Gesamtoberfläche von 8 $cm^2$ mit der LB-Technik aufgebracht. Die Tauchrichtung durch die monofilmbelegte Wasseroberfläche war aufwärts-abwärts-aufwärts-abwärts durch die unbelegte Wasseroberfläche -aufwärts. Die Schichtsysteme waren identisch im Aufbau der ersten und zweiten Monolagen. Sie unterschieden sich in der chemischen Zusammensetzung der dritten und der vierten (zuletzt aufgebrachten) Monolage. Während die dritte Monolage in den Vergleichsbeispielen A und B aus Verbindungen mit unfluorierten Kohlenwasserstoffketten bestand, enthielt sie in den Beispielen 1 und 2 endständig fluorierte Verbindungen. Die dritte Monolage enthielt jeweils einen langkettig substituierter Fluoreszenzfarbstoff (S9) in kleiner Konzentration (Molverhältnis Matrix/Farbstoff = 100:1) beigefügt. Durch Fluoreszenzanregung dieser dritten Monolage konnte jederzeit geprüft werden, ob sich diese Monolage bei folgenden Manipulationen vom Träger abgelöst hatte oder nicht. Besonders kritisch war diesbezüglich das Eintauchen der Probe durch die unbelegte Wasseroberfläche. Dieser Schritt ist erforderlich, um beim Aufziehen die unpolaren Kettenenden der 3. Lage mit den polaren Kopfgruppen der 4. Monolage zu kontaktieren.

Die Abnahme der filmbedeckten Wasseroberfläche bei der Übertragung jeweils der zweiten, dritten und vierten Monoschicht mit der Zeit wurde überwacht (konstante Tauchgeschwindigkeit). Aufgrund der rechteckigen Geometrie des Glasträgers mit einer Oberfläche von 8 cm$^2$ lag eine optimale Übertragung eines dicht gepackten Films dann vor, wenn bei konstanter Tauchgeschwindigkeit die Fläche linear um maximal 8 cm$^2$ mit der Zeit abnahm.

Insgesamt vier Schichtsysteme wurden hergestellt. Die Verfahrensweise geht aus der folgenden Tabelle hervor.

|  | Monofilm | | | |
|---|---|---|---|---|
|  | 1 | 2 | 3 | 4 |
| Tauch-richtung | aufwärts | abwärts | aufwärts | aufwärts |
| Vergleichs-beispiel A | $C_{20}$ | $C20-NH_2$ | $C_{18}:S9$ | DOMA |
| Beispiel 1 | $C_{20}$ | $C20-NH_2$ | $F_3C_{18}:C_{16}:S9$ | DOMA |
| Vergleichs-beispiel B | $C_{20}$ | $C20-NH_2$ | $C_{18}:S9$ | $C20-NH_2$ |
| Beispiel 2 | $C_{20}$ | $C20-NH_2$ | $F_3C_{18}:C_{16}:S9$ | $C20-NH_2$ |
| Schub | 30 mN/m | 40 mN/m | 15 mN/m | 30 mN/m (A,1) 40 mN/m (B,2) |
| Subphase (20 °C) | Wasser + CdCl$_2$ ($3\cdot10^{-4}$ mol) | --------- Wasser --------------- -- ohne ionische Zusätze ------ | | |

Die Proben wurden senkrecht zur Wasseroberfläche getaucht.

Die übertragene Fläche betrug für den DOMA-, bzw. $C_{20}-NH_2$-Monofilm (4. Monolage) etwa 1 cm$^2$ bzw. 4 cm$^2$, wenn die darunterliegende 3. Monolage nur Verbindungen mit unfluorierten Kohlenwasserstoffketten enthielt. Die maximale Filmübertragung der 4. Monolage von 8 cm$^2$ wurde nur dann erreicht, falls die 3. Monolage Verbindungen mit endständig fluorierten Kohlenwasserstoffketten enthielt.

Eine maximale Filmübertragung kann erreicht werden, wenn die Dipolmomente an der Kontaktfläche gleich gerichtet sind. Eine vollständige Filmübertragung ist die Voraussetzung für eine gute Haftung. Die Beispiele 1 und 2 zeigen, daß der Einbau der endständig perfluorierten langkettigen Säure in die dritte Monolage die Haftung der vierten Monolage deutlich verbessert.

6

**Vergleichsbeispiel C und Beispiel 3**

Ein Mehrschichtsystem aus monomolekularen Filmen wurde wiederum auf einen Glasträger aufgebracht. Die mechanische Haftung zwischen Glasträger und Schichtsystem wurde dadurch charakterisiert, daß das Schichtsystem mit einem zweiten auf eine Polystyrolfolie aufgetragenem Schichtsystem (2 monomolekulare Schichten Cd-Arachidat) kontaktiert wurde und die Folie anschließend mechanisch abgetrennt wurde. Die Polystyrolfolie wurde jeweils beim Austauchvorgang vom Glasträger abgetrennt. Bei der Trennung blieben, je nach dem Grad der mechanischen Haftung zwischen Schichtsystem und Träger, Untereinheiten des Schichtsystems an der Polystyrolfolie oder an dem Glasträger haften.

Unterschiede in der Haftung der hydrophoben Seite einer Monolage auf der silanierten, d.h. hydrophobisierten, Glasoberfläche traten zwischen Monofilmen mit unfluorierten Kohlenwasserstoffketten (Vergleichsbeispiel C) und solchen auf, die endständig fluorierte Verbindungen (Beispiel 3) enthielten. Die untersuchten Schichtsysteme unterschieden sich nur in der ersten Monolage. Die erste Monolage wurde jeweils durch flaches Tauchen übertragen, d.h. die Probenoberfläche wurde parallel zur Oberfläche eingetaucht.

Die Übertragung der folgenden Monolagen erfolgte durch senkrechtes Tauchen. Der $F_3C_{18}$:Hexadecan-Monofilm wurde nach 10 minütiger Lagerung übertragen, um die Verdunstung von überschüssigem Hexadecan zu gewährleisten.

Chemische Zusammensetzung der Schichtsysteme:

Silanierte Glasoberfläche

1. Monolage (abwärts:
(obere Trägerhälfte = Vergleichsbeispiel C)
$C_{18}$ $\pi$ = 30 mN/m
(untere Trägerhälfte = Beispiel 3) $F_3C_{18}$:Hexadecan = 1:20, $\pi$ = 30 mN/m
2. Monolage (aufwärts) und 3. Monolage (abwärts):
$C_{20}$ $\pi$ = 40 mN/m
4. Monolage (aufwärts):
S9:$C_{20}$-Me:$C_{20}$ = 1:2:18, $\pi$ = 40 mN/m.
Nach Aufbringen der 4. Monolage wird das Absorptions-Differenz-Spektrum zwischen oberer und unterer Hälfte des Schichtsystems aufgenommen. Es ist keine Differenz zu erkennen.
5. Schritt (abwärts):
Aufziehen einer Polystyrolfolie, die bereits vorher mit zwei Monolagen $C_{20}$ beschichtet worden war.
6. Schritt (aufwärts):
Abtrennen der Polystyrolfolie beim Austauchen der Probe. Die intermolekularen Wechselwirkungen bestimmten, entlang welcher Schichtebene das Schichtsystem aufgetrennt wurde.
Nach der Übertragung der 4. Monolage und nach Beendigung des 6. Schrittes wurde ein Differenzspektrum in der Absorption zwischen oberer und unterer Hälfte des Schichtsystems gemessen.

Die Differenz der Absorption zwischen dem oberen und unteren Schichtsystem direkt nach der Übertragung der 4. Monolage war verschindend klein gegenüber dem Differenzspektrum, das im Anschluß an die mechanische Abtrennung des Polystyrolhäutchens gemessen worden war. Bereits mit dem bloßen Auge war anhand der Fluoreszenzintensität zu erkennen, daß das obere Schichtsystem von dem Glasträger getrennt wurde und somit keine Fluoreszenz zeigte, während das untere Schichtsystem der mechanischen Beanspruchung bei Abtrennung des Polystyrolhäutchens standhielt und bis zu mindestens der 4. Monolage auf dem Glasträger haften blieb.

Die Haftung des oberen Schichtsystems war bestimmt durch die intermolekularen Wechselwirkungen zwischen unfluorierten Kohlenwasserstoffketten mit der silanierten Glasoberfläche. Im unteren Schichtsystem wurden die unfluorierten Kohlenwasserstoffketten teilweise ersetzt durch endständig fluorierte Ketten und zeigten eine erheblich verbesserte Haftung.

**Patentansprüche**

1.  Film, bestehend aus mindestens zwei auf einen Träger übertragenen monomolekularen Schichten aus Molekülen amphiphiler Verbindungen, die jeweils hydrophile und hydrophobe Gruppen aufweisen und gleichsinnig, parallel nebeneinander und im wesentlichen senkrecht zur Schichtebene angeordnet sind dadurch gekennzeichnet, daß die Moleküle benachbarten Schichten alternierend mit ihrem hydrophilen und ihrem hydrophoben Bereich einander zugewandt sind und die allgemeinen Formeln $X(CH_2)_aY$ und $X^1(CH_2)_bY^1$ aufweisen, wobei X und $X^1$ jeweils hydrophile Gruppen und Y und $Y^1$ unterschiedliche hydrophobe Gruppen und a und b jeweils ganze Zahlen von 6 bis 25 bedeuten und die beiden hydrophoben Gruppen Y und $Y^1$ so ausgewählt sind, daß ihre Gruppendipolmomente umgekehrtes Vorzeichen aufweisen.

2. Film, gemäß Anspruch 1, dadurch gekennzeichnet, daß die beiden hydrophoben Gruppen Y und $Y^1$ so ausgewählt sind, daß an der Kontaktstelle zweier hydrophober Bereiche benachbarter Schichten die Gruppendipolmomente von Y und $Y^1$ gleichgerichtet sind.

3. Film, gemäß Anspruch 1, dadurch gekennzeichnet, daß Y ausgewählt ist aus $-CH_3$ und $-CO_2CH_3$ und $Y^1$ $-CF_3$ ist.

4. Film, gemäß Anspruch 1, dadurch gekennzeichnet, daß mindestens eine Schicht aus einer amphiphilen Verbindung der Formel

$$X-(CH_2)_n-(CF_2)_m-CF_3 \qquad (II)$$

besteht, in der

X eine hydrophile Gruppe,
n eine ganze Zahl von 4 bis 24,
m eine Zahl von 0 bis 18, und
die Summe von n + m eine Zahl von 6 bis 24 bedeutet und die benachbarte Schicht aus einer amphiphilen Verbindung der Formel

$$X^1-(CH_2)_a-CH_3 \qquad (III)$$

besteht, wobei

$X^1$ eine hydrophile Gruppe und
a eine ganze Zahl von 6 bis 25 bedeutet.

5. Film, gemäß Anspruch 1, dadurch gekennzeichnet, daß mindestens eine Schicht aus einem Gemisch einer amphiphilen Verbindung der Formel

$$X-(CH_2)_n-(CF_2)_m-CF_3 \qquad (II)$$

in der

X eine hydrophile Gruppe,
n eine ganze Zahl von 4 bis 24,
m eine Zahl von 0 bis 18, und
die Summe von n + m eine Zahl von 6 bis 24 bedeutet,
und einer amphiphilen Verbindung der Formel

$$X^2-(CH_2)_p-(CH_3) \qquad (III)$$

besteht, wobei $X^2$ eine hydrophile Gruppe und p eine ganze Zahl von 12 bis 24 bedeutet, und die benachbarte Schicht aus einer amphiphilen Verbindung der Formel

$$X^1-(CH_2)_a-CH_3 \qquad (III)$$

besteht, wobei

$X^1$ eine hydrophile Gruppe und
a eine ganze Zahl von 6 bis 25 bedeutet.

6. Film, bestehend aus mindestens zwei auf einen Träger übertragenen monomolekularen Schichten aus Molekülen amphiphiler Verbindungen, die jeweils hydrophile und hydrophobe Gruppen aufweisen und gleichsinnig, parallel nebeneinander und im wesentlichen senkrecht zur Schichtebene angeordnet sind, dadurch gekennzeichnet, daß die Moleküle benachbarter Schichten jeweils mit ihren hydrophilen und

8

hydrophoben Bereichen einander zugewandt sind und die allgemeinen Formeln $X(CH_2)_aY$ und $X^1(CH_2)_bY^1$ aufweisen, wobei X und $X^1$ hydrophile Gruppen und Y und $Y^1$ hydrophobe Gruppen und a und b jeweils ganze Zahlen von 6 bis 25 bedeuten und die hydrophilen und die hydrophoben Gruppen Y und $Y^1$ so ausgewählt sind, daß ihre Gruppendipolmomente an der Kontaktfläche der benachbarten Schichten gleichgerichtet sind.

7. Film nach mindestens einem der Ansprüche 1 bis 6, dadurch gekennzeichnet, daß die hydrophilen Gruppen X, $X^1$ und $X^2$ unabhängig voneinander Hydroxylgruppen, Carboxylgruppen, Aminogruppen, $NH_3^{(+)}$-Gruppen, Carbonsäureester-Gruppen, $NR^1R^2$-Gruppen mit $R^1$ gleich H oder $C_1$-$C_4$-Alkyl und $R^2$ gleich $C_1$-$C_4$-Alkyl oder $CH_2$-$CH_2$-OH, oder $N^{(+)}R^3R^4R^5$-Gruppen sind, in denen $R^3$, $R^4$ und $R^5$ Methyl oder Ethyl ist.

**Claims**

1. A film comprising at least two unimolecular layers which have been transferred onto a carrier and comprise molecules of amphiphilic compounds which contain both hydrophilic and hydrophobic groups and are arranged in the same direction, parallel along-side one another and essentially perpendicular to the layer plane, wherein the molecules of adjacent layers face one another alternately through their hydrophilic and their hydrophobic regions and have the formulae $X(CH_2)_aY$ and $X^1(CH_2)_bY^1$, where X and $X^1$ are each hydrophilic groups, and Y and $Y^1$ are different hydrophobic groups, and a and b are each integers from 6 to 25, and the two hydrophobic groups Y and $Y^1$ are selected so that their group dipole moments have opposite preceding signs.

2. A film as claimed in claim 1, wherein the two hydrophobic groups Y and $Y^1$ are selected so that the group dipole moments of Y and $Y^1$ are aligned in the same direction at the point of contact between two hydrophobic regions on adjacent layers.

3. A film as claimed in claim 1, wherein Y is selected from $-CH_3$ and $-CO_2CH_3$ and $Y^1$ is $-CF_3$.

4. A film as claimed in claim 1, wherein at least one layer comprises an amphiphilic compound of the formula

$$X-(CH_2)_n-(CF_2)_m-CF_3 \qquad (II)$$

in which
X is a hydrophilic group,
n is an integer from 4 to 24,
m is a number from 0 to 18, and
the sum of n + m is a number from 6 to 24, and the adjacent layer comprises an amphiphilic compound of the formula

$$X^1-(CH_2)_a-CH_3 \qquad (III)$$

where
$X^1$ is a hydrophilic group and
a is an integer from 6 to 25.

5. A film as claimed in claim 1, wherein at least one layer comprises a mixture of an amphiphilic compound of the formula

$$X-(CH_2)_n-(CF_2)_m-CF_3 \qquad (II)$$

in which
X is a hydrophilic group,
n is an integer from 4 to 24,
m is a number from 0 to 18, and
the sum of n + m is a number from 6 to 24,
and an amphiphilic compound of the formula

$X^2$-$(CH_2)_p$-$CH_3$     (III)

where $X^2$ is a hydrophilic group and p is an integer from 12 to 24,
and the adjacent layer comprises an amphiphilic compound of the formula

$X^1$-$(CH_2)_a$-$CH_3$     (III)

where
$X^1$ is a hydrophilic group and
a is an integer from 6 to 25.

6. A film comprising at least two unimolecular layers which have been transferred onto a carrier and comprise molecules of amphiphilic compounds which contain both hydrophilic and hydrophobic groups and are arranged in the same direction, parallel along-side one another and essentially perpendicular to the layer plane, wherein the molecules of adjacent layers in each case face one another through their hydrophilic and their hydrophobic regions and have the formulae $X(CH_2)_aY$ and $X^1(CH_2)_bY^1$, where X and $X^1$ are hydrophilic groups, and Y and $Y^1$ are hydrophobic groups, and a and b are each integers from 6 to 25, and the hydrophilic and hydrophobic groups Y and $Y^1$ are selected so that their group dipole moments are aligned in the same direction at the contact area between adjacent layers.

7. A film as claimed in at least one of claims 1 to 6, wherein the hydrophilic groups X, $X^1$ and $X^2$, independently of one another, are hydroxyl groups, carboxyl groups, amino groups, $NH_3^{(+)}$ groups, carboxylate groups, $NR^1R^2$ groups where $R^1$ is H or $C_1$-$C_4$-alkyl and $R^2$ is $C_1$-$C_4$-alkyl or $CH_2$-$CH_2$-OH, or $N^{(+)}R^3R^4R^5$ groups in which $R^3$, $R^4$ and $R^5$ are methyl or ethyl.

## Revendications

1. Film, consistant en au moins deux couches monomoléculaires s'étendant sur un support et consistant en des molécules de composés amphiphiles, qui présentent à chaque fois des groupes hydrophiles et des groupes hydrophobes et sont disposés dans le même sens, parallèles les uns aux autres et essentiellement perpendiculaires au plan des couches, film caractérisé en ce que les molécules de couches voisines présentent, alternativement, l'une à l'autre leur zone hydrophile et leur zone hydrophobe et présentent les formules générales $X(CH_2)_aY$ et $X^1(CH_2)_bY^1$ formules dans lesquelles X et $X^1$ représentent à chaque fois des groupes hydrophiles et Y et $Y^1$ représentent des groupes hydrophobes différents, et a et b sont des nombres entiers valant chacun de 6 à 25 et les deux groupes hydrophobes Y et $Y^1$ sont choisis de façon que les moments de dipoles des groupes présentent des signes opposés.

2. Film selon la revendication 1 caractérisé en ce que les deux groupes hydrophobes Y et $Y^1$ sont choisis de façon qu'aux endroits de contact de deux zones hydrophobes de couches voisines, les moments de dipoles de groupes de Y et $Y^1$ soient de même sens,

3. Film selon la revendication 1 caractérisé en ce que Y est choisi parmi -$CH_3$ et -$CO_2CH_3$ et $Y^1$ représente -$CF_3$.

4. Film selon la revendication 1 caractérisé en ce qu'au moins une couche consiste en un composé amphiphile de formule :

$X$-$(CH_2)_n$-$(CF_2)_m$-$CF_3$     (II)

dans laquelle,
  X représente un groupe hydrophile,
  n est un nombre entier valant 4 à 24
  m est un nombre valant 0 à 18 et,
  la somme de (n+m) est un nombre valant 6 à 24 et la couche voisine consiste en un composé amphiphile de formule :

$$X^1\text{-}(CH_2)_a\text{-}CH_3 \qquad \text{(III)}$$

dans laquelle

$X^1$ représente un groupe hydrophile, et

a est un nombre entier valant 6 à 25 .

5. Film selon la revendication 1, caractérisée en ce qu'au moins une couche consiste en un mélange d'un composé amphiphile de formule

$$X\text{-}(CH_2)_n\text{-}(CF_2)_m\text{-}CF_3 \qquad \text{(II)}$$

(dans laquelle

X représente un groupe hydrophile,

n est un nombre entier valant 4 à 24,

m est un nombre valant 0 à 18, et,

la somme de (n + m) est un nombre valant 6 à 24),

et d'un composé amphiphile de formule

$$X^2\text{-}(CH_2)_p\text{-}(CH_3) \qquad \text{(III)}$$

(dans laquelle $X^2$ représente un groupe hydrophile et p est un nombre entier valant 12 à 24) et la couche voisine consiste en un composé amphiphile de formule:

$$X^1\text{-}(CH_2)_a\text{-}CH_3 \qquad \text{(III)}$$

dans laquelle :

$X^1$ représente un nombre hydrophile et ,

a est un nombre entier valant 6 à 25.

6. Film consistant en au moins deux couches monomoléculaires s'étendant sur un support et formé de molécules de composés amphiphiles, qui présentent chaque fois des groupes hydrophiles et des groupes hydrophobes et sont disposés dans le même sens, parallèlement les uns aux autres, essentiellement perpendiculairement au plan des couches, film caractérisé en ce que les molécules de couches voisines présentent chaque fois, l'une vers l'autre, leurs zones hydrophiles et leurs zones hydrophobes et présentent les formules générales $X\ (CH_2)_aY$ et $X^1\ (CH_2)_bY^1$, dans lesquelles X et $X^1$ représentent des groupes hydrophiles et Y et $Y^1$ représentent des groupes hydrophobes et a et b sont des nombres entiers valant chacun 6 à 25, et les groupes hydrophiles et les groupes hydrophobes, Y et $Y^1$,sont choisis de façon que les moments de dipoles des groupes aient le même sens à la surface de contact des couches voisines.

7. Film selon l'une au moins des revendications 1 à 6, caractérisé en ce que les groupes hydrophiles X, $X^1$ et $X^2$ représentent chacun, indépendamment l'un de l'autre, des groupes hydroxyles, des groupes carboxyles, des groupes amino, des groupes $NH_3(^+)$, des groupes ester d'acide carboxylique, des groupes $NR^1R^2$, dans lesquels $R^1$ représente H ou un groupe alkyle en $C_1$ à $C_4$; et $R^2$ représente un groupe alkyle en $C_1$ à $C_4$ ou $CH_2\text{-}CH_2\text{-}OH$, ou les groupes $N(^+)R^3R^4R^5$, dans lesquels $R^3,R^4$ et $R^5$ représentent chacun un groupe méthyle ou éthyle.